(19) Europäisches Patentamt / European Patent Office / Office européen des brevets

(11) **EP 4 329 425 A1**

(12) **EUROPEAN PATENT APPLICATION**
published in accordance with Art. 153(4) EPC

(43) Date of publication:
**28.02.2024 Bulletin 2024/09**

(51) International Patent Classification (IPC):
***H05B 3/86*** (2006.01)

(21) Application number: **22836946.8**

(86) International application number:
**PCT/CN2022/104104**

(22) Date of filing: **06.07.2022**

(87) International publication number:
**WO 2023/280200 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2021 CN 202110764186**

(71) Applicant: **Fuyao Glass Industry Group Co., Ltd.**
**Fuqing, Fujian 350300 (CN)**

(72) Inventors:
• **CHEN, Zhixin**
  **Fuzhou, Fujian 350301 (CN)**
• **GUAN, Jinliang**
  **Fuzhou, Fujian 350301 (CN)**
• **JIANG, Bingming**
  **Fuzhou, Fujian 350301 (CN)**
• **ZHANG, Canzhong**
  **Fuzhou, Fujian 350301 (CN)**
• **TU, Lele**
  **Fuzhou, Fujian 350301 (CN)**

(74) Representative: **Mewburn Ellis LLP**
**Aurora Building**
**Counterslip**
**Bristol BS1 6BX (GB)**

(54) **VEHICLE WINDOW ASSEMBLY**

(57) A vehicle window assembly is provided in the disclosure. The vehicle window assembly includes a first bearing plate, a first conductive layer, a second conductive layer, a first bus bar, and a second bus bar. The first bus bar is in direct electrical contact with the first conductive layer, and the second bus bar is in direct electrical contact with the first conductive layer or the second conductive layer. The vehicle window assembly has a first heating zone and a second heating zone arranged between the first bus bar and the second bus bar, where the first heating zone is in direct connection with the second heating zone. The first conductive layer covers at least the first heating zone, and the second conductive layer at least partially covers the second heating zone. A total resistance of the first heating zone is greater than a total resistance of the second heating zone, and a sheet resistance of the first heating zone is greater than a sheet resistance of the second heating zone. In the disclosure, a primary visual zone and a wiper rest zone can be simultaneous heated, thereby reducing or even eliminating local hot spots that may be generated in the wiper rest zone and ensuring that heating temperature rise in at least the primary visual zone is greater than or equal to 6°C within 4 minutes.

**FIG. 2**

## Description

### CROSS-REFERENCE TO RELATED APPLICATION(S)

This application claims priority to Chinese Patent Application No. 202110764186.8, filed July 06, 2021 and entitled "VEHICLE WINDOW ASSEMBLY", the entire disclosure of which is incorporated herein by reference.

### TECHNICAL FIELD

This disclosure relates to the technical field of automotive components, and in particular to a vehicle window assembly.

### BACKGROUND

Automobiles have become one of the important means of transportation in human society. The automobile is usually equipped with a wiper. In cold weather, the wiper may be frozen to a surface of a windshield. In this case, it is necessary to remove snow or ice between the wiper and the windshield manually, through heating, or in other manners. For example, in U.S. Patent No. 5,886,321 A, a device for heating a wiper rest zone on a vehicle windshield is provided, where a resistance heating wire is disposed in the windshield to generate sufficient heat to ensure normal operation of the wiper.

In the related art (for example, Chinese patents CN101653038A and CN1620840A), in order to achieve heating in both a primary visual zone and the wiper rest zone of the windshield for operations such as demisting, defrosting, snow removal, and/or deicing to ensure driving safety, resistance heating elements may be disposed in the primary visual zone and the wiper rest zone of the windshield, respectively. However, this causes that an additional bus bar is required to be disposed in the wiper rest zone.

In practical products, a transparent conductive layer may be disposed in both the primary visual zone and the wiper rest zone of the windshield, and the primary visual zone and the wiper rest zone may be simultaneous heated via two bus bars opposite each other. Since an ink masking layer may be disposed in the wiper rest zone, if the transparent conductive layer and the ink masking layer are located on the same surface of a glass substrate, at least part of the transparent conductive layer in the wiper rest zone may be stacked on the ink masking layer. Due to the effect of ink on the transparent conductive layer, a resistance of the transparent conductive layer on the ink masking layer may be abnormally increased, ultimately resulting in local hot spots and even insufficient overall temperature rise, and thus easily causing a safety hazard.

## SUMMARY

A vehicle window assembly is provided in the disclosure, which can solve the technical problems of local hot spots and even insufficient overall temperature rise of a vehicle window glass during electrical heating of the vehicle window glass.

A vehicle window assembly is provided in the disclosure. The vehicle window assembly includes a first bearing plate, a first conductive layer, a second conductive layer, a first bus bar, and a second bus bar. The first conductive layer is disposed on a surface of the first bearing plate. The second conductive layer is disposed on the first conductive layer or the surface of the first bearing plate on which the first conductive layer is disposed. The first bus bar is in direct electrical contact with the first conductive layer, and the second bus bar is in direct electrical contact with the first conductive layer or the second conductive layer. The vehicle window assembly has a first heating zone and a second heating zone arranged between the first bus bar and the second bus bar, where the first heating zone is in direct connection with the second heating zone. The first conductive layer covers at least the first heating zone, and the second conductive layer at least partially covers the second heating zone. A total resistance of the first heating zone is greater than a total resistance of the second heating zone, and a sheet resistance of the first heating zone is greater than a sheet resistance of the second heating zone.

In the disclosure, a primary visual zone and a wiper rest zone may be simultaneous heated via the first bus bar and the second bus bar opposite the first bus bar, thereby reducing or even eliminating local hot spots that may be generated in the wiper rest zone and ensuring that heating temperature rise in at least the primary visual zone is greater than or equal to 6°C within 4 minutes.

Optionally, a ratio $e$ of the total resistance $R_B$ of the second heating zone to the total resistance $R_A$ of the first heating zone satisfies:

$$e = \frac{R_B}{R_A} = k\frac{S_2}{S_1},$$

where $k$ represents a ratio of an average power density of the second heating zone to an average power density of the first heating zone, $S2$ represents a total area of the second heating zone, and $S1$ represents a total area of the first heating zone.

Optionally, the first conductive layer is a transparent conductive oxide film or a transparent conductive metal film, and the second conductive layer is a conductive block, a transparent conductive oxide film, or a transparent conductive metal film.

Optionally, the first conductive layer at least partially extends into the second heating zone, and the first conductive layer is in electrical connection with the second conductive layer.

Optionally, the first conductive layer extends to a position directly below the second bus bar.

Optionally, the second conductive layer covers at least 60% of the second heating zone.

Optionally, the first conductive layer does not extend to a position directly below the second bus bar, and a sheet resistance of the second conductive layer is less than a sheet resistance of the first conductive layer.

Optionally, the second conductive layer includes multiple conductive blocks arranged at intervals. A ratio of a length of each of the multiple conductive blocks in a direction perpendicular to the second bus bar to a perpendicular distance between the first bus bar and the second heating zone multiplied by the ratio k equals the ratio e.

Optionally, each of the multiple conductive blocks includes multiple conductive sub-blocks arranged at intervals. A ratio of a total length of the multiple conductive sub-blocks in the direction perpendicular to the second bus bar to the perpendicular distance between the first bus bar and the second heating zone multiplied by the ratio $k$ equals the ratio $e$.

Optionally, the ratio $k$ of the average power density of the second heating zone to the average power density of the first heating zone ranges from 0.8 to 2.0.

Optionally, a ratio of a total area of the first heating zone to a total area of the second heating zone ranges from 5 to 15.

Optionally, the vehicle window assembly further includes a masking layer, an adhesive layer, and a second bearing plate. The masking layer is disposed between the first bearing plate and the first conductive layer. The masking layer includes a first masking sub-layer disposed in the first heating zone and a second masking sub-layer disposed in the second heating zone. The second bearing plate is adhered to the first bearing plate via the adhesive layer.

## BRIEF DESCRIPTION OF THE DRAWINGS

In order to describe technical solutions in embodiments of the disclosure more clearly, the following will give a brief introduction to accompanying drawings required for describing the embodiments. Apparently, the accompanying drawings hereinafter described merely illustrate some embodiments of the disclosure. Based on the accompanying drawings, those of ordinary skills in the art can also obtain other drawings without creative effort.

FIG. 1 is a schematic top view of a vehicle window assembly provided in an embodiment of the disclosure.
FIG. 2 is a schematic cross-sectional view of FIG. 1, taken along line I-I.
FIG. 3 is a partial schematic top view of a vehicle window assembly provided in another embodiment of the disclosure.
FIG. 4 is a schematic cross-sectional view of a vehicle window assembly provided in an embodiment of the disclosure.
FIG. 5 is a partial schematic top view of a vehicle window assembly provided in another embodiment of the disclosure.
FIG. 6 is a partial schematic top view of a vehicle window assembly provided in another embodiment of the disclosure.
FIG. 7 is a partial schematic top view of a vehicle window assembly provided in another embodiment of the disclosure.
FIG. 8 is a partial schematic top view of a vehicle window assembly provided in another embodiment of the disclosure.
FIG. 9 is a schematic top view of a vehicle provided in an embodiment of the disclosure.

Reference signs: vehicle window assembly - 1, first heating zone - 1a, second heating zone - 1b, first bearing plate - 11, first conductive layer - 12, second conductive layer - 13, silver paste conductive block - 131, conductive sub-block - 1311, bus-bar layer - 14, first bus bar - 141, second bus bar - 142, masking layer - 15, first masking sub-layer - 151, second masking sub-layer - 152, adhesive layer - 16, second bearing plate - 17, vehicle - 2, frame - 21.

## DETAILED DESCRIPTION

The technical solutions in embodiments of the disclosure are clearly and completely described hereinafter with reference to the accompanying drawings in the embodiments of the disclosure. Apparently, the described embodiments are merely part of rather than all of the embodiments of the disclosure. All other embodiments obtained by those of ordinary skill in the art based on the embodiments provided herein without creative efforts shall fall within the scope of the disclosure.

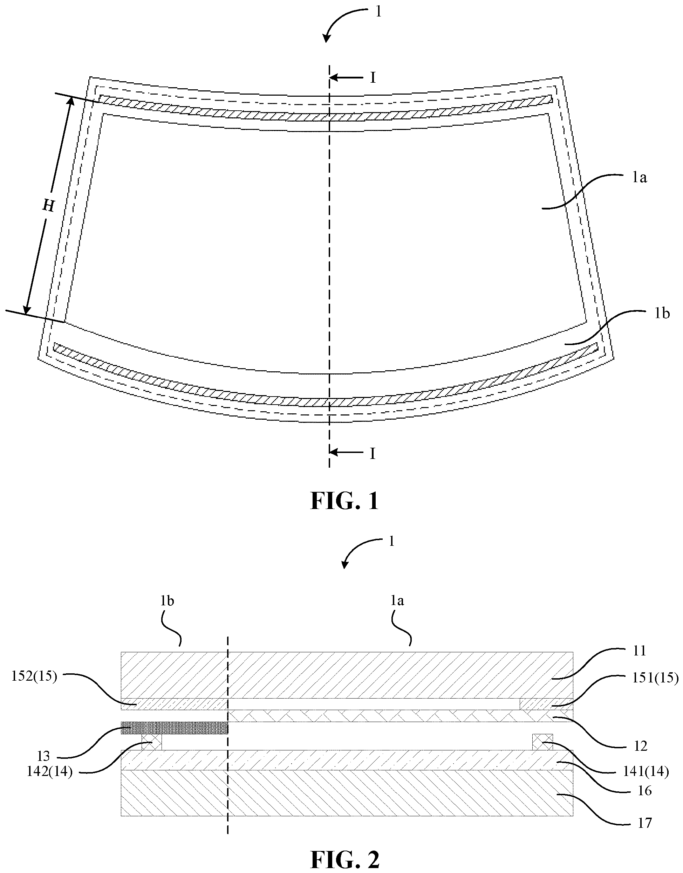

A vehicle window assembly 1 is provided in the disclosure. Refer to FIG. 1 and FIG. 2 together, where FIG. 1 is a schematic top view of a vehicle window assembly provided in an embodiment of the disclosure, and FIG. 2 is a schematic cross-sectional view of FIG. 1, taken along line I-I. The vehicle window assembly 1 includes a first bearing plate 11, a first conductive layer 12, a second conductive layer 13, and a bus-bar layer 14. The first conductive layer 12 and the second conductive layer 13 are disposed on the same surface of the first bearing plate 11. The bus-bar layer 14 includes a first bus bar 141 and a second bus bar 142. The first bus bar 141 is in direct electrical contact with the first conductive layer 12. The second bus bar 142 is in direct electrical contact with the second conductive layer 13. The vehicle window assembly has a first heating zone 1a and a second heating zone 1b between the first bus bar 141 and the second bus bar 142, where the first heating zone 1a is in direct connection with the second heating zone 1b. The first conductive layer 12 covers at least the first heating zone 1a. The second conductive layer 13 at least partially covers the second heating zone 1b. The first bus bar 141 and the second bus bar 142 are electrically connected to two poles of a power supply (not illustrated), respectively, so that a current of the power supply can be transmitted to the first conductive layer 12 and the second conductive layer 13.

The vehicle window assembly 1 may be used as a front windshield of a vehicle, the first heating zone 1a may cover at least a primary visual zone of the front windshield, and the second heating zone 1b may cover at least a wiper rest zone of the front windshield. In the disclosure, the primary visual zone and the wiper rest zone may be simultaneous heated via the first bus bar 141 and the second bus bar 142 opposite the first bus bar 141, thereby reducing or even eliminating local hot spots that may be generated in the wiper rest zone and ensuring that heating temperature rise in at least the primary visual zone is greater than or equal to 6°C within 4 minutes. In the disclosure, preferably, a total resistance $R_A$ of the first heating zone 1a is greater than a total resistance $R_B$ of the second heating zone 1b, and a sheet resistance of the first heating zone 1a is larger than a sheet resistance of the second heating zone 1b.

In heating design of the vehicle window assembly 1 in the disclosure, a ratio $e$ of the total resistance $R_B$ of the second heating zone 1b to the total resistance $R_A$ of the first heating zone 1a satisfies formula (1):

$$e = \frac{R_B}{R_A} = k \frac{S_2}{S_1} \quad (1)$$

where $k$ represents a ratio of an average power density of the second heating zone to an average power density of the first heating zone, $S2$ represents a total area of the second heating zone, and $S1$ represents a total area of the first heating zone. The average power density of the first heating zone 1a and the average power density of the second heating zone 1b may be obtained according to actual heating standard requirements. The ratio $e$ is designed to satisfy formula (1), which can further ensure that the heating temperature rise in the primary visual zone is greater than or equal to 6°C within 4 minutes, and even can satisfy a requirement that heating temperature rise in the wiper rest zone is greater than the heating temperature rise in the primary visual zone in some practical application scenarios.

It may be noted that, structures of various layers are illustrated in a perspective form in the accompanying drawings for clearer illustration of arrangements of layers under the first bearing plate 11. This does not imply that the various layers can be directly observed from a top view of the first bearing plate 11.

Specifically, in the embodiment, the first bearing plate 11 is made of transparent glass. The vehicle window assembly 1 has the first heating zone 1a and the second heating zone 1b in direct connection with the first heating zone 1a. A masking layer 15 may be disposed on the first bearing plate 11 (as illustrated in FIG. 2) to block a relatively small part of the first heating zone 1a and a relatively large part or even all of the second heating zone 1b.

It may be noted that, the vehicle window assembly 1 has the first heating zone 1a and the second heating zone 1b in direct connection with the first heating zone 1a, which means that a boundary of the first heating zone 1a is smoothly connected to a boundary of the second heating zone 1b adjacent to the boundary of the first heating zone 1a.

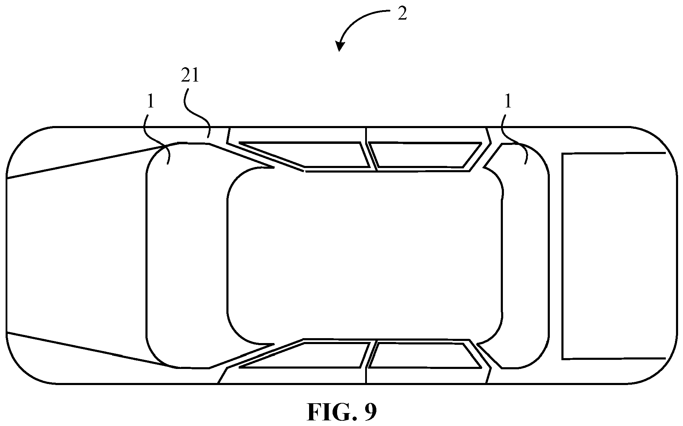

In a case where the vehicle window assembly 1 is applied to a vehicle 2 (as illustrated in FIG. 9), a wiper of the vehicle 2 is mounted to a side surface of the first bearing plate 11 away from the first conductive layer 12. The second heating zone 1b corresponds to the wiper rest zone, and the first heating zone 1a corresponds to a cleanable zone that can be cleaned by the wiper. When the vehicle window assembly 1 is used as a front windshield of the vehicle 2, the cleanable zone of the wiper generally corresponds to the primary visual zone of the front windshield.

It may be noted that, when a current flows through an electronic element, the electronic element may generate a certain amount of heat, and the amount of heat generated is usually in direct proportion to a resistance of the electronic element. That is to say, in the case where a magnitude of the current flowing the electronic element is constant, a greater resistance of the electronic element leads to a greater amount of heat generated within the same duration. In the related art, generally, the first bearing plate 11 is made of transparent glass, and the masking layer 15 disposed on the first bearing plate 11 is made of ink. Since the masking layer 15 has significant impact on a local resistance of the second heating zone 1b, part of the first bearing plate 11 corresponding to the second heating zone 1b is prone to generating local hot spots, resulting in significant heating unevenness, and possibly leading to a certain risk of local overheating and cracking.

In the embodiment, the first conductive layer 12 may be a transparent conductive oxide film or a transparent conductive metal film, and the second conductive layer 13 may be a silver paste conductive block, a transparent conductive oxide film, or a transparent conductive metal film. The transparent conductive oxide film contains at least one metal oxide layer. The at least one metal oxide layer may be made of a material selected from a group consisting of indium tin oxide (ITO), fluorine-doped tin oxide (FTO), aluminium-doped zinc oxide (AZO), antimony-doped tin oxide (ATO), etc. The transparent conductive oxide film may further contain at least one dielectric layer made of a material selected from a group consisting of zinc oxide, tin oxide, indium oxide, titanium oxide, silicon oxide, aluminium oxide, silicon nitride, silicon carbide, aluminium nitride, and titanium. The transparent conductive metal film contains at least one metal layer and/or metal alloy layer. The metal layer may be made of a material selected from a group consisting of gold (Au), silver (Ag), copper (Cu), aluminium (Al), and molybdenum (Mo). The metal alloy layer may be made of a silver alloy, such as a silver-gold alloy, a silver-copper alloy, a silver-aluminium alloy, etc. The transparent conductive metal film may further contain at least one dielectric layer made of a material selected from a group consisting of zinc oxide, tin oxide, indium oxide, titanium oxide, silicon oxide, aluminium oxide, silicon nitride, silicon carbide, aluminium nitride, and titanium. The transparent conductive oxide film or the transparent conductive metal film may be directly deposited on a surface of the first bearing plate 11 by chemical vapor deposition (CVD) or physical vapor deposition (PVD), for example, by magnetron sputtering. Furthermore, preferably, the transparent conductive oxide film or the transparent conductive metal film can withstand high-temperature heat treatment, for example, a heat treatment of a bending process such as bending or tempering. The silver paste conductive block may be formed through printing, such as screen printing, ink jet printing, etc.

In the embodiment, in order to obtain a better visual field, a range of the first heating zone 1a may be greater than that of the second heating zone 1b. That is to say, an area of part of the first bearing plate 11 corresponding to the first heating zone 1a may be greater than an area of part of the first bearing plate 11 corresponding to the second heating zone 1b. It may be understood that, in order to ensure driving safety, it is required to preferentially ensure heating efficiency in the primary visual zone, for example, ensure that the heating temperature rise in the primary visual zone is greater than or equal to 6°C within 4 minutes.

It may be noted that, in the embodiment, the first conductive layer 12 extends from the first heating zone 1a to the second heating zone 1b, and the first conductive layer 12 is in electrical connection with the second conductive layer 13. This allows a junction between the first conductive layer 12 and the second conductive layer 13 to be shielded by the masking layer 15, ensuring overall visual aesthetics when viewed from the outside of the vehicle.

In an embodiment of the disclosure, the first conductive layer 12 does not extend to a position directly below the second bus bar 142. The second conductive layer 13 in the second heating zone 1b is disposed on the surface of the first bearing plate 11 on which the first conductive layer 12 is disposed. One end of the second conductive layer 13 in the second heating zone 1b is in direct electrical contact with the second bus bar 142, the other end of the second conductive layer 13 is in direct electrical contact with the first conductive layer 12 that extends into the second heating zone 1b, that is, the second conductive layer 13 in the second heating zone 1b partially overlaps the first conductive layer 12 extending into the second heating zone 1b. In this case, the sheet resistance of the second conductive layer 13 is set to be smaller than that of the first conductive layer 12 to reduce or even eliminate local hot spots that may be generated in the wiper rest zone and ensure that the heating temperature rise in at least the primary visual zone is greater than or equal to 6°C within 4 minutes. For example, the first conductive layer 12 is a transparent conductive metal film containing at least two metal layers, and the at least two metal layers each may be any one of a silver layer and a silver alloy layer. The second conductive layer 13 is a silver paste conductive block or a transparent conductive metal film that contains at least three metal layers. Specifically, for example, the first conductive layer 12 is a transparent conductive metal film containing two silver layers (i.e., a double-silver film system), and the second conductive layer 13 is a transparent conductive metal film containing three or four silver layers (i.e., a three-silver film system or a four-silver film system), so that the sheet resistance of the second heating zone 1b is less than that of the first heating zone 1a.

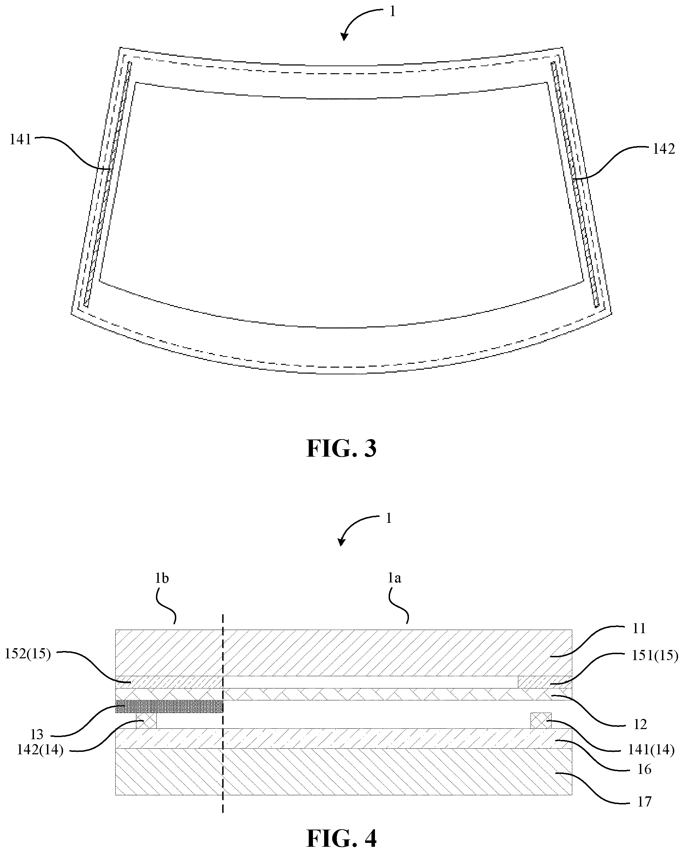

It may be understood that, in other possible embodiments, the first bus bar 141 and the second bus bar 142 may be disposed at other positions on the vehicle window assembly 1. For example, in a possible embodiment, refer to FIG. 3, where FIG. 3 is a partial schematic top view of a vehicle window assembly provided in another embodiment of the disclosure. As illustrated in FIG. 3, the first bus bar 141 and the second bus bar 142 may be disposed at two opposite side edges of the vehicle window assembly 1, respectively. The first bus bar 141 and the second bus bar 142 may extend in length directions of the two opposite side edges of the vehicle window assembly 1, respectively. The first bus bar 141 and the second bus bar 142 may be substantially parallel to the two opposite side edges of the vehicle window assembly 1, respectively.

In a possible embodiment, refer to FIG. 4, where FIG. 4 is a schematic cross-sectional view of a vehicle window assembly provided in an embodiment of the disclosure. The first conductive layer 12 extends to the position directly below the second bus bar 142, the second bus bar 142 is disposed on an upper surface of the second conductive layer 13, and the second conductive layer 13 covers an upper surface of part of the first conductive layer 12 that is positioned in the second heating zone 1b.

It may be noted that, in the embodiment, the first conductive layer 12 is in direct electrical contact with the second conductive layer 13. That is to say, the total resistance of the second heating zone 1b is determined by the second conductive layer 13 and part of the first conductive layer 12 in the second heating zone 1b that is electrically connected in parallel to the second conductive layer 13. In order to achieve that the ratio $e$ of the total resistance of the second heating zone 1b to the total resistance of the first heating zone 1a satisfies formula (1), the second conductive layer 13 is set to cover at least 60% of the second heating zone 1b in the disclosure.

In the embodiment, the first conductive layer 12 extends to the position directly below the second bus bar 142. The second conductive layer 13 and part of the first conductive layer 12 that is positioned in the second heating zone 1b are electrically connected in parallel to form a heating resistor of the second heating zone 1b. Part of the first conductive layer 12 that is positioned in the second heating zone 1b is disposed on a second masking sub-layer 152. The second conductive layer 13 covers an upper surface of the part of the first conductive layer 12 that is positioned in the second heating zone 1b. The second conductive layer 13 may be a silver paste conductive block, a transparent conductive metal oxide film (containing at least one TCO layer, such as ITO, FTO, and AZO), or a transparent conductive metal film that contains at least one metal layer. Specifically, for example, the first conductive layer 12 is a transparent conductive metal film containing two silver layers (i.e., is a double-silver film system), and the second conductive layer 13 is a transparent conductive metal film containing one or two silver layers (i.e., is a single-silver film system or a double-silver film system) or may be a transparent conductive metal oxide film containing ITO layer or FTO layer.

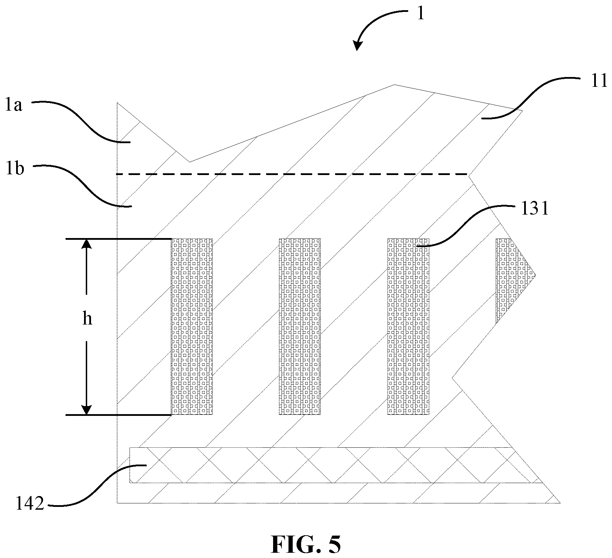

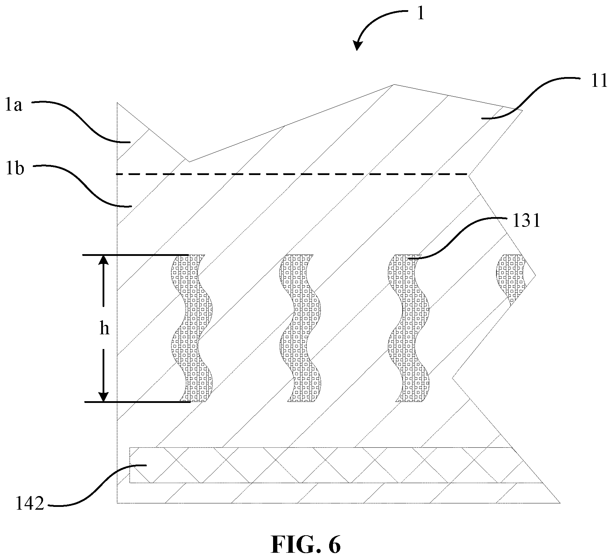

In a possible embodiment, refer to FIG. 5 and FIG. 6, where FIG. 5 is a partial schematic top view of a vehicle window assembly provided in another embodiment of the disclosure, and FIG. 6 is a partial schematic top view of a vehicle window assembly provided in another embodiment of the disclosure. The second conductive layer 13 includes multiple silver paste conductive blocks 131 arranged at intervals. The multiple silver paste conductive blocks 131 are disposed on part of the first conductive layer 12 that is positioned in the second heating zone 1b. As illustrated in FIG. 5 and FIG. 6, the second bus bar 142 is in direct electrical contact with part of the first conductive layer 12 that is positioned in the second heating zone 1b, and the multiple silver paste conductive blocks 131 are not in direct electrical contact with the second bus bar 142 (i.e., the second conductive layer 13 is not in direct electrical contact with the second bus bar 142). It may be understood that, in other embodiments of the disclosure, the multiple silver paste conductive blocks 131 may be arranged to be in direct electrical contact with the second bus bar 142, that is, the second conductive layer 13 is in direct electrical contact with the second bus bar 142. A ratio of a length $h$ of each of the multiple silver paste conductive blocks 131 in a direction perpendicular to the second bus bar 142 to a perpendicular distance H between the first bus bar 141 and the second heating zone 1b (as illustrated in FIG. 1) multiplied by a ratio $k$ equals the ratio e, where the ratio $k$ represents a ratio of an average power density of the second heating zone 1b to an average power density of the first heating zone 1a, and the ratio e represents a ratio of the total resistance of the second heating zone 1b to the total resistance of the first heating zone 1a.

Specifically, the second conductive layer 13 includes the multiple silver paste conductive blocks 131 arranged at intervals. The multiple silver paste conductive blocks 131 are evenly distributed on the second conductive layer 13, so that when a current flows through the second conductive layer 13, the silver paste conductive blocks 131 can evenly heat the part of the first bearing plate 11 corresponding to the second heating zone 1b. Meanwhile, the second conductive layer 13 includes the multiple silver paste conductive blocks 131 arranged at intervals, which can weaken masking effect of the second heating zone 1b on an electromagnetic wave signal.

In the embodiment, FIG. 5 and FIG. 6 illustrate the length $h$ of the silver paste conductive block 131 in the direction perpendicular to the second bus bar 142 and the perpendicular distance H between the first bus bar 141 and the second heating zone 1b. The ratio of the length $h$ of the silver paste conductive block 131 in the direction perpendicular to the second bus bar 142 to the perpendicular distance $H$ between the first bus bar 141 and the second heating zone 1b multiplied by the ratio $k$ equals the ratio e. Specifically, the ratio e satisfies formula (2):

$$e = k\frac{h}{H} \quad (2)$$

where $H$ represents a perpendicular distance between the first bus bar 141 and the second heating zone 1b, and $h$ represents a length of the conductive block 131 in the direction perpendicular to the second bus bar 142.

In the embodiment, in order to ensure the ratio $e$ of the total resistance of the second heating zone 1b to the total resistance of the first heating zone 1a to satisfy the above relationship, the ratio of the length $h$ of the silver paste conductive block 131 in the direction perpendicular to the second bus bar 142 to the perpendicular distance $H$ between the first bus bar 141 and the second heating zone 1b is required to satisfy formula (2).

It may be noted that, as illustrated in FIG. 5, the silver paste conductive block 131 is in a shape of a rectangle in the top view, and the length $h$ of the silver paste conductive block 131 in the direction perpendicular to the second bus bar 142 is a side length of the rectangle, which is relatively easy to be calculated. Referring to FIG. 6, in the embodiment illustrated in FIG. 6, the silver paste conductive block 131 is in an S-shape in the top view, and the length $h$ of the silver paste conductive block 131 in the direction perpendicular to the second bus bar 142 is an average current-path length between a highest point of the S-shape and a lowest point of the S-shape. It may be understood that, in other possible embodiments, the silver paste conductive block 131 may be in other shapes as long as a current-path length between two outermost sides of the silver paste conductive block 131 in the direction perpendicular to the second bus bar 142 is equal to the length $h$, which is not limited in the disclosure.

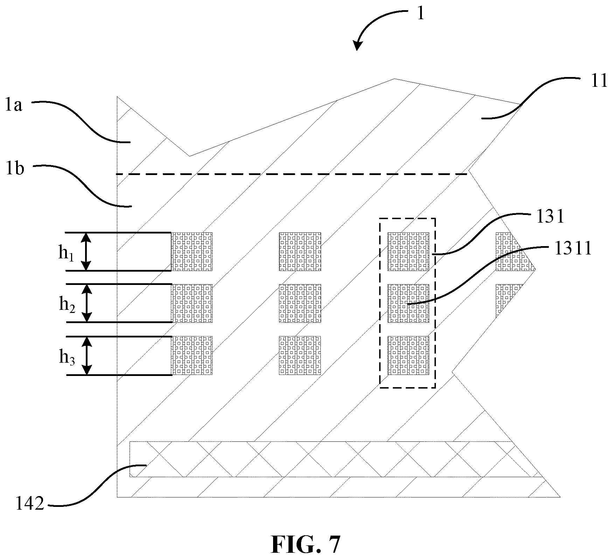

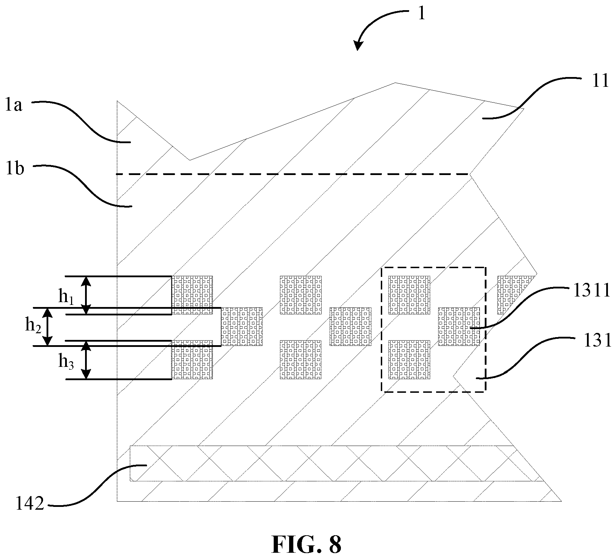

In a possible embodiment, refer to FIG. 7 and FIG. 8, where FIG. 7 is a partial schematic top view of a vehicle window assembly provided in another embodiment of the disclosure, and FIG. 8 is a partial schematic top view of a vehicle window assembly provided in another embodiment of the disclosure. Each silver paste conductive block 131 includes multiple conductive sub-blocks 1311 arranged at intervals. Each of the multiple conductive sub-blocks 1311 is disposed on the first conductive layer 12 extending into the second heating zone 1b. A ratio of a total length $hx$ of the multiple conductive sub-blocks 1311 in the direction perpendicular to the second bus bar 142 to the perpendicular distance $H$ between the first bus bar 141 and the second heating zone 1b multiplied by the ratio $k$ equals the ratio $e$.

It may be understood that, compared with the previous one embodiment, the silver paste conductive block 131 includes the multiple the conductive sub-blocks 1311 arranged at intervals, which may further reduce or even eliminate local hot spots that may be generated in the wiper rest zone, and even achieve more even heating of the part of the first bearing plate 11 corresponding to the second heating zone 1b.

Specifically, the ratio of the total length $hx$ of the conductive sub-blocks 1311 in the direction perpendicular to the second bus bar 142 to the perpendicular distance $H$ between the first bus bar 141 and the second heating zone 1b multiplied by the ratio $k$ equals the ratio $e$, where ratio $e$ represents a ratio of the total resistance of the second heating zone 1b to the total resistance of the first heating zone 1a, and also satisfies formula (2).

In FIG. 7, three conductive sub-blocks 1311 of each silver paste conductive block 131 are arranged at intervals in a column in the direction perpendicular to the second bus bar 142. In this case, total length $h = h1 + h2 + h3 + ... + hx$, $x$ represents the number of conductive sub-blocks 1311 of each silver paste conductive block 131. In FIG. 7, $x$ is equal to 3, and $h1, h2, h3, ... , hx$ represent lengths of all conductive sub-block 1311 of each silver paste conductive block 131 in the direction perpendicular to the second bus bar 142, respectively.

In FIG. 8, the multiple conductive sub-blocks 1311 of each silver paste conductive block 131 are arranged at intervals in two columns in the direction perpendicular to the second bus bar 142, and at least two of the multiple conductive sub-blocks 1311 are arranged at intervals in one column. In FIG. 8, for example, each silver paste conductive block 131 includes three conductive sub-blocks 1311, a conductive sub-block 1311 having length $h1$ and a conductive sub-block 1311 having length $h3$ are arranged in one column in the direction perpendicular to the second bus bar 142, and a conductive sub-block 1311 having length $h2$ is arranged in another column separately. In this case, total length $h = (h1 + h2) * h3/(h1 + h2 + h3)$. FIG. 8 also illustrates that length $h2$ is greater than a spacing between the conductive sub-block 1311 having length $h1$ and the conductive sub-block 1311 having length $h3$.

It may be understood that, in other possible embodiments, the number of conductive sub-blocks 1311 of each silver paste conductive block 131 may be others, and each of the conductive sub-blocks 1311 may be in other shapes, which is not limited in the disclosure.

In a possible embodiment, the ratio $k$ of the average power density of the second heating zone 1b to the average power density of the first heating zone 1a ranges from 0.8 to 2.0.

Specifically, in order to preferentially ensure the heating efficiency in the primary visual zone (for example, ensure that the heating temperature rise in the primary visual zone is greater than or equal to 6°C within 4 minutes), and ensure that heating efficiency in the wiper rest zone satisfies actual usage requirements, the ratio $k$ of the average power density of the second heating region 1b to the average power density of the first heating region 1a is set to be equal to or greater than 0.8 in the disclosure. When both the heating efficiency in the primary visual zone and the heating efficiency in the wiper rest zone can be satisfied, the heating efficiency in the wiper rest zone may be set to be greater than the heating efficiency in the primary visual zone, i.e., the ratio k is greater than 1, thereby satisfying heating requirements in a specific usage scenario. In order to avoid excessive heating of the wiper rest zone, the ratio $k$ of the average power density of the second heating zone 1b to the average power density of the first heating zone 1a is set to be less than or equal to 2.0 in the disclosure.

Furthermore, the ratio $k$ of the average power density of the second heating zone 1b to the average power density of the first heating zone 1a ranges from 1.0 to 1.5. Specifically, the ratio k may be 1.1, 1.2, 1.4, 1.5, etc., which can be adjusted according to actual situations and is not limited in the disclosure.

In a possible embodiment, a ratio of the total area of the first heating zone 1a to the total area of the second heating zone 1b ranges from 5 to 15.

Specifically, a heating efficiency in the second heating zone 1b and a heating efficiency in the first heating zone 1a are also related to the ratio of the total area of the first heating zone 1a to the total area of the second heating zone 1b. In the embodiment, the ratio of the total area of the first heating zone 1a to the total area of the second heating zone 1b ranges from 5 to 15. Furthermore, the ratio of the total area of the first heating zone 1a to the total area of the second heating zone 1b ranges from 8 to 12. Specifically, the ratio of the total area of the first heating zone 1a to the total area of the second heating zone 1b may be 9, 10.5, 11, 12, etc., which can be adjusted according to actual situations and is not limited in the disclosure.

In a possible embodiment, referring to FIG. 2 again, the vehicle window assembly 1 further includes a masking layer 15, an adhesive layer 16, and a second bearing plate 17. The masking layer 15 is disposed between the first bearing plate 11 and the first conductive layer 12. The masking layer 15 includes a first masking sub-layer 151 disposed in the first heating zone 1a and a second masking sub-layer 152 disposed in the second heating zone 1b. The second bearing plate 17 is adhered to the first bearing plate 11 via the adhesive layer 16 to form a laminated glass for a vehicle window.

Specifically, as illustrated in FIG. 2, the first masking sub-layer 151 on the first bearing plate 11 covers only small part of the first heating zone 1a, preventing the first masking sub-layer 151 from blocking a field of view of the first bearing plate 11 corresponding to the first heating zone 1a. The second masking sub-layer 152 on the first bearing plate 11 substantially covers the whole second heating zone 1b, thereby providing a good visual field for the wiper rest zone.

In the embodiment, each of the first bearing plate 11 and the second bearing plate 17 may be a bending glass plate. The bending glass plate may be formed by subjecting a flat and straight glass plate to high-temperature heat treatment of at least 560°C and bending forming. The high-temperature heat treatment of 560°C and bending forming are both production processes of automotive glasses, where the production processes of automotive glasses include, for example, bending, tempering, or other bending processes. The first bearing plate 11 or the second bearing plate 17 may be a chemically tempered glass plate with a thickness less than or equal to 1.1 mm.

A vehicle 2 is further provided in the disclosure. Refer to FIG. 9, where FIG. 9 is a schematic top view of a vehicle provided in an embodiment of the disclosure. The vehicle 2 includes a frame 21 and the vehicle window assembly 1. The frame 21 is configured for mounting of the vehicle window assembly 1.

Specifically, for the vehicle window assembly 1, reference may be made to the foregoing illustration, which will not be repeated herein. In the embodiment, as illustrated in FIG. 9, the vehicle window assemblies 1 are mounted to both a front window and a rear window of the vehicle 2 in a travelling direction of the vehicle 2, and a wiper of the vehicle 2 is disposed in the second heating zone 1b of the vehicle window assembly 1. This improves a capability of the wiper to clear away rain, snow, and frost, thereby reducing a driving risk of the vehicle 2 in bad weather, such as rain, snow, frost, etc.

When the vehicle window assembly 1 is mounted to a front window of a vehicle to serve as a front windshield, the vehicle window assembly 1 is generally a laminated glass and includes the first bearing plate 11, the adhesive layer 16, and the second bearing plate 17. The first bearing plate 11 is an outer glass plate facing the outside of the vehicle. The second bearing plate 17 is an inner glass plate located inside the vehicle. The first conductive layer 12 and the second conductive layer 13 are located between the first bearing plate 11 and the adhesive layer 16.

Principles and embodiment manners of the disclosure are elaborated with specific embodiments herein. The illustration of embodiments above is only used to help understanding of methods and core ideas of the disclosure. At the same time, for those of ordinary skill in the art, according to ideas of the disclosure, there will be changes in the specific embodiment manners and application scope. In summary, contents of this specification should not be understood as limitation on the disclosure.

**Claims**

1. A vehicle window assembly, comprising a first bearing plate, a first conductive layer, a second conductive layer, a first bus bar, and a second bus bar, wherein the first conductive layer is disposed on a surface of the first bearing plate, the second conductive layer is disposed on the first conductive layer or the surface of the first bearing plate on which the first conductive layer is disposed; the first bus bar is in direct electrical contact with the first conductive layer, and the second bus bar is in direct electrical contact with the first conductive layer or the second conductive layer; the vehicle window assembly has a first heating zone and a second heating zone arranged between the first bus bar and the second bus bar, wherein the first heating zone is in direct connection with the second heating zone, the first conductive layer covers at least the first heating zone, and the second conductive layer at least partially covers the second heating zone; and a total resistance of the first heating zone is greater than a total resistance of the second heating zone, and a sheet resistance of the first heating zone is greater than a sheet resistance of the second heating zone.

2. The vehicle window assembly of claim 1, wherein a ratio $e$ of the total resistance $R_B$ of the second heating zone to the total resistance $R_A$ of the first heating zone satisfies:

$$ e = \frac{R_B}{R_A} = k \frac{S_2}{S_1}, $$

wherein $k$ represents a ratio of an average power density of the second heating zone to an average power density of the first heating zone, $S2$ represents a total area of the second heating zone, and $S1$ represents a total area of the first heating zone.

3. The vehicle window assembly of claim 2, wherein the first conductive layer is a transparent conductive oxide film or a transparent conductive metal film, and the second conductive layer is a conductive block, a transparent conductive oxide film, or a transparent conductive metal film.

4. The vehicle window assembly of claim 3, wherein the first conductive layer at least partially extends into the second heating zone, and the first conductive layer is in electrical connection with the second conductive layer.

5. The vehicle window assembly of claim 4, wherein the first conductive layer extends to a position directly below the second bus bar.

6. The vehicle window assembly of claim 5, wherein the second conductive layer covers at least 60% of the second heating zone.

7. The vehicle window assembly of claim 4, wherein the first conductive layer does not extend to a position directly below the second bus bar, and a sheet resistance of the second conductive layer is less than a sheet resistance of the first conductive layer.

8. The vehicle window assembly of claim 3, wherein the second conductive layer comprises a plurality of conductive blocks arranged at intervals, wherein a ratio of a length of each of the plurality of conductive blocks in a direction perpendicular to the second bus bar to a perpendicular distance between the first bus bar and the second heating zone multiplied by the ratio k equals the ratio e.

9. The vehicle window assembly of claim 8, wherein each of the plurality of conductive blocks comprises a plurality of conductive sub-blocks arranged at intervals, wherein a ratio of a total length of the plurality of conductive sub-blocks in the direction perpendicular to the second bus bar to the perpendicular distance between the first bus bar and the second heating zone multiplied by the ratio k equals the ratio $e$.

10. The vehicle window assembly of claim 2, wherein the ratio $k$ of the average power density of the second heating zone to the average power density of the first heating zone ranges from 0.8 to 2.0.

11. The vehicle window assembly of claim 1, wherein a ratio of a total area of the first heating zone to a total area of the second heating zone ranges from 5 to 15.

12. The vehicle window assembly of claim 1, further comprising a masking layer, an adhesive layer, and a second bearing plate, wherein the masking layer is disposed between the first bearing plate and the first conductive layer, the masking layer comprises a first masking sub-layer disposed in the first heating zone and a second masking sub-layer disposed in the second heating zone, and the second bearing plate is adhered to the first bearing plate via the ad-

hesive layer.

1

←— I

H

1a

1b

←— I

**FIG. 1**

1

1b                1a

152(15)                                11
                                       151(15)

13                                     12
142(14)                                141(14)
                                       16
                                       17

**FIG. 2**

**FIG. 3**

**FIG. 4**

**FIG. 5**

**FIG. 6**

**FIG. 7**

1

11

1a

1b

$h_1$

$h_2$

$h_3$

1311

131

142

**FIG. 8**

**FIG. 9**

## INTERNATIONAL SEARCH REPORT

| International application No. |
| --- |
| **PCT/CN2022/104104** |

### A. CLASSIFICATION OF SUBJECT MATTER

H05B 3/86(2006.01)i

According to International Patent Classification (IPC) or to both national classification and IPC

### B. FIELDS SEARCHED

Minimum documentation searched (classification system followed by classification symbols)

H05B

Documentation searched other than minimum documentation to the extent that such documents are included in the fields searched

Electronic data base consulted during the international search (name of data base and, where practicable, search terms used)

CNKI, CNPAT, WPI, EPODOC: 车窗, 加热, 区域, 局部, 母线, 涂层, 第一, 第二, 导电, 雨刮, 热点, 过热, window, heat+, region, bus, coat+, first, second, conductive, wiper, hot w spot, overheat+, vehicle

### C. DOCUMENTS CONSIDERED TO BE RELEVANT

| Category* | Citation of document, with indication, where appropriate, of the relevant passages | Relevant to claim No. |
| --- | --- | --- |
| PX | CN 113660745 A (FUYAO GLASS INDUSTRY GROUP CO., LTD.) 16 November 2021 (2021-11-16)<br>claims 1-12 | 1-12 |
| A | CN 105247953 A (LG CHEMICAL LTD.) 13 January 2016 (2016-01-13)<br>description, paragraphs 0026, 0069-0070, and 0118-0125, and figure 2 | 1-12 |
| A | CN 101998938 A (SAINT-GOBAIN GLASS FRANCE S.A.) 30 March 2011 (2011-03-30)<br>description, paragraphs 0045-0074, and figures 1 and 12 | 1-12 |
| A | EP 2146548 A2 (SAINT-GOBAIN GLASS FRANCE et al.) 20 January 2010 (2010-01-20)<br>entire document | 1-12 |
| A | CN 109392205 A (FUYAO GLASS INDUSTRY GROUP CO., LTD.) 26 February 2019 (2019-02-26)<br>entire document | 1-12 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 August 2022** | **28 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/104104**

| Patent document cited in search report | | | Publication date (day/month/year) | Patent family member(s) | | | Publication date (day/month/year) |
|---|---|---|---|---|---|---|---|
| CN | 113660745 | A | 16 November 2021 | None | | | |
| CN | 105247953 | A | 13 January 2016 | EP | 2928264 | A1 | 07 October 2015 |
| | | | | KR | 20140105408 | A | 01 September 2014 |
| | | | | KR | 20150105272 | A | 16 September 2015 |
| | | | | WO | 2014129845 | A1 | 28 August 2014 |
| | | | | KR | 101622887 | B1 | 19 May 2016 |
| | | | | CN | 105247953 | B | 19 October 2018 |
| | | | | US | 2015327334 | A1 | 12 November 2015 |
| | | | | EP | 2928264 | B1 | 24 July 2019 |
| CN | 101998938 | A | 30 March 2011 | US | 2015232067 | A1 | 20 August 2015 |
| | | | | DE | 202008017848 | U1 | 23 September 2010 |
| | | | | PL | 2274251 | T3 | 30 November 2012 |
| | | | | WO | 2009124646 | A1 | 15 October 2009 |
| | | | | DE | 102008018147 | A1 | 15 October 2009 |
| | | | | EP | 2274251 | A1 | 19 January 2011 |
| | | | | US | 2011108537 | A1 | 12 May 2011 |
| | | | | EP | 2274251 | B1 | 27 June 2012 |
| | | | | CN | 101998938 | B | 01 July 2015 |
| | | | | EP | 2274251 | B2 | 08 June 2016 |
| | | | | US | 9573846 | B2 | 21 February 2017 |
| | | | | US | 9815433 | B2 | 14 November 2017 |
| EP | 2146548 | A2 | 20 January 2010 | DE | 102008033617 | A1 | 21 January 2010 |
| CN | 109392205 | A | 26 February 2019 | CN | 109392205 | B | 18 September 2020 |

Form PCT/ISA/210 (patent family annex) (January 2015)

**EP 4 329 425 A1**

**REFERENCES CITED IN THE DESCRIPTION**

**Patent documents cited in the description**

- CN 202110764186
- US 5886321 A
- CN 101653038 A
- CN 1620840 A